# EUROPÄISCHE PATENTSCHRIFT

(11) **EP 2 434 878 B1**
(45) Veröffentlichungstag und Bekanntmachung des Hinweises auf die Patenterteilung: **08.01.2014**
(21) Anmeldenummer: 10722622.7
(22) Anmeldetag: 26.05.2010
(51) Int. Cl.: A01N 37/42, A01P 3/00

(54) **ANTIOOMYCOTICA**
ANTI-OOMYCETES
ANTI-OOMYCÈTES

(30) Priorität: 26.05.2009 DE 102009022619
(43) Veröffentlichungstag der Anmeldung: 04.04.2012
(73) Patentinhaber: Leibniz-Institut für Pflanzenbiochemie (IPB), 06120 Halle (Saale) (DE); BASF SE, 67056 Ludwigshafen (DE)
(72) Erfinder: ARNOLD, Norbert, 06120 Halle (DE); TEICHERT, Axel, CH-3007 Bern (CH); ROSAHL, Sabine, 06108 Halle (Saale) (DE); WESTERMANN, Bernhard, 06120 Halle (DE); WESSJOHANN, Ludger, A., 06120 Halle (DE); ESCHEN-LIPPOLD, Lennart, 06108 Halle (DE); DRAEGER, Tobias, 39579 Demker (DE)
(74) Vertreter: Müller-Boré & Partner Patentanwälte
(86) Internationale Anmeldenummer: PCT/EP2010/003189
(87) Internationale Veröffentlichungsnummer: WO 2010/136185

(56) Entgegenhaltungen:
- TEICHERT AXEL ET AL: "Unusual bioactive 4-oxo-2-alkenoic fatty acids from Hygrophorus eburneus", ZEITSCHRIFT FUR NATURFORSCHUNG, TEIL B:ANORGANISCHE CHEMIE, ORGANISCHE CHEMIE, VERLAG DER ZEITSCHRIFT FUR NATURFORSCHUNG. TUBINGEN, DE, Bd. 60, Nr. 1, 1. Januar 2005 (2005-01-01) , Seiten 25-32, XP009141761, ISSN: 0932-0776
- TILO LÜBKEN: "Hygrophorone Neue antifungische Cyclopentenonderivate aus Hygrophorus-Arten (Basidiomycetes)", DISSERTATION MARTIN-LUTHER-UNIVERSITÄT HALLE-WITTENBERG,, [Online] 16. März 2006 (2006-03-16), Seiten 1-130, XP007916032, Gefunden im Internet: URL:http://sundoc.bibliothek.uni-halle.de/ diss-online/06/06H309/prom.pdf> [gefunden am 2010-12-02]
- LENNART ESCHEN-LIPPOLD ET AL: "Antioomycete Activity of gamma-Oxocrotonate Fatty Acids against P. infestans", JOURNAL OF AGRICULTURAL AND FOOD CHEMISTRY, AMERICAN CHEMICAL SOCIETY, US, Bd. 57, Nr. 20, 24. September 2009 (2009-09-24), Seiten 9607-9612, XP007915988, ISSN: 0021-8561, DOI: DOI:10.1021/JF902067K [gefunden am 2009-09-24]

## Beschreibung

Die vorliegende Erfindung betrifft die Verwendung von Verbindungen der allgemeinen Formel (I) oder eines Salzes davon als Antioomycoticum sowie ein diese Verbindungen verwendendes Verfahren zur Bekämpfung von Pflanzenpathogenen.

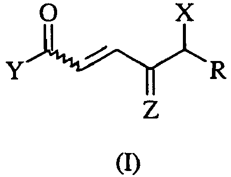

Die Klasse der Eipilze oder *Peronosporomycetes* (früher *Oomycota* oder *Oomycetes),* die nicht zu den Pilzen *(Fungi)* gehören, umfaßt eine vielfältige Gruppe saprophytischer und pathogener Spezies. Unter den Letzteren gibt es neben Spezies, die Tiere oder Mikroorganismen befallen, auch verheerend wirkende Pflanzenpathogene. Wichtige Pflanzenpathogene finden sich in den Gattungen *Albugo, Bremia, Plasmopara, Peronospora* und *Phytophthora.* Diese obligat pathogenen Spezies verursachen zum Beispiel Krankheiten wie den Weißen Rost oder den falschen Mehltau auf einer Vielzahl verschiedener Pflanzen. In der Gattung *Phytophthora* sind mehr als 60 verschiedene Spezies beschrieben, die vorwiegend zweikeimblättrige Pflanzen infizieren. Manche davon sind sehr stark an einen bestimmten Wirt oder wenige Wirte adaptiert, während andere viele verschiedene Pflanzen besiedeln können.

*Phytophthora infestans* als Verursacher der Kraut- und Braunfäule der Tomate bzw. der Kraut- und Knollenfäule der Kartoffel gilt als das weltweit zerstörerischste Pflanzenpathogen. Infektionen sind schwer zu kontrollieren und können zu vollständigen Ernteverlusten führen, da der Lebenszyklus von *P. infestans* nur wenige Tage dauert.

Die meisten herkömmlichen Fungizide sind gegen *P*. *infestans* und andere Eipilze unwirksam. Ursache dafür ist das Fehlen von typischen fungalen Zielstrukturen der Wirkung vieler Fungizide bei den Peronosporomyceten.

Der vorliegenden Erfindung liegt daher die Aufgabe zugrunde, neue effektive Mittel gegen Pflanzenpathogene, insbesondere Peronosporomyceten bereitzustellen.

Diese Aufgabe wird durch die in den Ansprüchen gekennzeichneten Ausführungsformen der vorliegenden Erfindung gelöst.

Insbesondere wird gemäß der Erfindung die Verwendung von Verbindungen der allgemeinen Formel (I) als Antioomycoticum sowie ein diese Verbindungen verwendendes Verfahren zur Bekämpfung von Pflanzenpathogenen bereitgestellt.

Dementsprechend betrifft ein Gegenstand der vorliegenden Erfindung die Verwendung einer Verbindung der Formel (I) oder eines Salzes davon als Antioomycoticum: 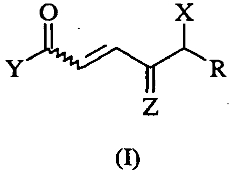 worin
X aus H, OR¹, SR¹, NR¹R², N(OR¹)(R²), N(R¹)-NR¹R² oder N(R¹R²R³)⁺A⁻ ausgewählt ist,
Y aus OR¹, O⁻Kat⁺ oder NR¹R² ausgewählt ist,
Z aus O, S, NR¹, NOR¹, N-CN oder N-NR¹R² ausgewählt ist,
R einen Substituenten darstellt, ausgewählt aus der Gruppe, bestehend aus (i) einem unsubstituierten oder ein bzw. mehrfach substituierten (C₃-C₂₂)-Alkylrest, (ii) einem unsubstituierten oder ein bzw. mehrfach substituierten (C₃-C₂₂)-Alkenylrest, (iii) einem unsubstituierten oder ein bzw. mehrfach substituierten (C₃-C₂₂)-Alkinylrest, (iv) einem unsubstituierten oder ein bzw. mehrfach substituierten -(CH₂)ₘ-Sperminrest, (v) einem unsubstituierten oder ein bzw. mehrfach substituierten -(CH₂)ₘ-Spermidinrest, (vi) einem unsubstituierten oder ein bzw. mehrfach substituierten N-methylierten -(CH₂)ₘ-Sperm(id)inrest, wobei m jeweils eine ganze Zahl von 1 bis 4 ist, und wobei der eine oder die mehreren Substituenten in den vorstehend genannten Resten (i) bis (vi) unabhängig voneinander aus der Gruppe α, bestehend aus einem (C₁-C₆)-Alkylrest, einem (C₁-C₆)-Thioalkylrest, einem (C₃-C₇)-Cycloalkylrest, der ein oder mehrere Heteroatome, wie beispielsweise O oder S, aufweisen kann, einem (C₁-C₆)-Alkoxyrest, einer Hydroxygruppe, einer Trifluormethylgruppe, einer Triazolgruppe, Brom, Chlor, Fluor, einem un-, mono- oder disubstituiertem Phenyl-, Phenoxy-, Benzyl-, Benzyloxy-, Naphthyl- oder Naphthoxyrest ausgewählt sein kann bzw. können, und (vii) einer Ethylenoxygruppe, ausgewählt aus
   -CH₂[OCH₂CH₂]ₙ-OH,
   -CH₂[OCH₂CH₂]ₙ-OMe,
   -CH₂-CH₂-[OCH₂CH₂]ₙ-OH
   -CH₂-CH₂-[OCH₂CH₂]ₙ-OMe
   -CH₂-CH₂-CH₂-[OCH₂CH₂]ₙ-OH
   -CH₂-CH₂-CH₂-[OCH₂CH₂]ₙ-OMe
   -CH₂-CH₂-CH₂-CH₂-[OCH₂CH₂]ₙ-OH oder
   -CH₂-CH₂-CH₂-CH₂-[OCH₂CH₂]ₙ-OMe,
   mit n= 1-20, vorzugsweise n= 1-5,
R¹, R² und R³ unabhängig voneinander aus Wasserstoff, einem (C₁-C₆)-Acylrest, -CONH₂, -(CO)-(CH₂)₀₋₆-COOH, einem Lactylrest, einem (C₁-C₆)-Alkylrest, einem (C₃-C₇)-Cycloalkylrest, der ein oder mehrere Heteroatome, wie beispielsweise O oder S, aufweisen kann, einem un-, mono- oder disubstituiertem Phenyl-, Benzyl-, oder Naphthylrest, dessen Substituenten aus der Gruppe α ausgewählt sein können; ausgewählt ist,
A⁻ für ein Anion, ausgewählt aus Halogenid, Chlorat oder Carboxylat, steht,
Kat⁺ für ein Kation steht, insbesondere einwertige oder zweiwertige Kationen wie z.B. Alkalimetallkationen (Na⁺,K⁺), Erdalkalimetallkationen (Ca²⁺, Mg²⁺) oder quartäre Ammoniumkationen,
das Stereozentrum am C5, wenn vorhanden, in R- oder S-Form oder als Racemat vorliegt, und "Zeitschrif für Naturforschung.Teil B-Bd. 60 (2005-01-01), S.25-32" offenbart Derivate der Formel (I), die Stoffwechselprodukte des Metabolismus von *Hygrophorus ebumeus* sind. Einige der Fettsäurenderivaten zeigen Fungizidewirkung gegen *C*. *cucumerinum.* T. Lübke (Dissertation- M. Luther Universität, Halle: "Hygrophorone Neue Antifungische Cyclopentenonderivate aus Hygrophorus Arten") zeigte, dass Derivate aus verschiedenen *Hygrophorus* Sorten aktiv gegen *P*. *Infestans* sind.
die C2-C3-Doppelbindung in E- oder Z-Form, vorzugsweise E-Form (trans), vorliegt.

Ein weiterer Gegenstand der vorliegenden Erfindung betrifft ein Verfahren zur Bekämpfung von Pflanzenpathogenen, umfassend das Aufbringen einer wirksamen Menge einer der vorstehend definierten Verbindungen oder eines Salzes davon auf eine Pflanze, Teile der Pflanze oder den Boden in dem die Pflanze wächst. Das erfindungsgemäße Verfahren kann sowohl präventiv als auch kurativ verwendet werden.

Der Begriff "Pflanzenpathogen" umfaßt dabei jegliche phytopathogenen Pilze, Protisten, Bakterien und Viren.

In einer bevorzugten Ausführungsform der vorliegenden Erfindung sind die Pflanzenpathogene Pilze (*Fungi*)*.* Besonders bevorzugte Pflanzenpathogene sind dabei *Colletotrichum coccodes, Colletotrichum graminicola, Septoria tritici, Fusarium graminearum, Blumeria graminis, Magnaporthe grisea, Ustilago maydis, Alternaria solani, Cladosporium fulvum, Cochliobolus heterostrophus, Pyrenophora tritici-repentis, Verticillium albo-atrum* und *Verticillium dahliae.*

In einer weiteren bevorzugten Ausführungsform der vorliegenden Erfindung sind die Pflanzenpathogene Eipilze *(Peronosporomycetes,* früher *Oomycota* oder *Oomycetes).* Besonders bevorzugt sind dabei Eipilze aus den Gattungen *Albugo, Bremia, Plasmopara, Peronospora* und *Phytophthora.* Ein besonders bevorzugtes Pflanzenpathogen aus der Gattung *Peronospora* ist *Peronospora manshurica.* Besonders bevorzugte Pflanzenpathogene aus der Gattung *Phytophthora* sind *Phytophthora sojae, Phytophthora palmivora, Phytophthora ramorum, Phytophthora cinnamomi, Phytophthora capsici* und *Phytophthora infestans.* Dabei ist ganz besonders bevorzugt *Phytophthora infestans.*

In einer bevorzugten Ausführungsform der vorliegenden Erfindung sind die Pflanzen, die mit dem erfindungsgemäßen Verfahren geschützt oder behandelt werden, aus der Gruppe, bestehend aus den *Fabaceae,* insbesondere *Glycine max,* den *Cucurbitaceae,* insbesondere *Cucurbita spp.* wie *Cucurbita pepo, Cucumis spp.* wie *Cucumis melo* und *Cucumis sativus,* und *Citrullus spp.* wie *Citrullus lanatus;* den *Brassicaceae,* insbesondere *Brassica spp.* wie *Brassica napus, Brassica oleracea* und *Brassica rapa;* den *Poaceae,* insbesondere *Triticum spp., Hordeum spp., Oryza sativa* und *Zea mays;* den *Solanaceae,* insbesondere *Nicotiana spp.* wie *Nicotiana tabacum, Capsicum spp.* wie *Capsicum annuum,* und *Solanum spp.* wie *Solanum tuberosum, Solanum lycopersicum* und *Solanum melongena; Vitis spp.* wie *Vitis vinifera; Beta vulgaris;* und *Theobroma cacao.* Ganz besonders bevorzugt ist dabei *Solanum tuberosum.*

Des Weiteren können mit dem erfindungsgemäßen Verfahren Bäume, insbesondere *Coniferae,* insbesondere *Pinaceae,* und Zierpflanzen, insbesondere Ziersträucher, geschützt oder behandelt werden.

Die Konzentration der Verbindung oder des Salzes davon in dem erfindungsgemäßen Verfahren reicht von 1 nM bis 10 mM, bevorzugt von 10 nM bis 1 mM. Besonders bevorzugt ist eine Konzentration von 100 µM.

Verfahren zum Aufbringen einer wirksamen Menge einer der vorstehend definierten Verbindungen oder eines Salzes davon auf eine Pflanze oder Teile der Pflanze sind dem Fachmann bekannt und umfassen beispielsweise das Besprühen, Benebeln, Bestreichen oder Eintauchen der Pflanze.

In einer besonders bevorzugten Ausführungsform des erfindungsgemäßen Verfahrens liegen die erfindungsgemäßen Verbindungen in Form eines Trägerzusammensetzungsgemisches vor, in dem die aktive Verbindung in einer Menge von zwischen 0,1 und 99 Gew.-%, vorzugsweise zwischen 1 und 75 Gew.-%, bezogen auf das Gemisch vorliegt. Trägerzusammensetzungsgemische für die direkte Anwendung oder Feldaufbringung enthalten die erfindungsgemäßen Verbindungen in einer Menge zwischen 0,0001 und 5 Gew.-%, vorzugsweise zwischen 0,001 und 3 Gew.-%, bezogen auf das Gemisch. Das erfindungsgemäße Verfahren umfasst die Verwendung von Formulierungen und Zusammensetzungen, die Gemische umfassen aus einem dispergierbaren Träger, wie einem dispergierbaren, inerten, feinverteilten Trägerfeststoff und/oder einer dispergierbaren Trägerflüssigkeit, wie einem inerten organischen Lösungsmittel und/oder Wasser, vorzugsweise unter Einschluss einer wirksamen Menge eines oberflächenaktiven Trägermittelhilfsstoffs und einer Menge der erfindungsgemäßen aktiven Verbindungen von zwischen 0,0001 und 99 Gew.-%, vorzugsweise zwischen 0,001 und 90 Gew.-%, vorzugsweise zwischen 0,1 und 75 Gew.-%. Die erfindungsgemäßen aktiven Verbindungen können nach üblicherweise angewandten Verfahren aufgebracht werden, beispielsweise als hydraulische Sprays hoher Flüssigkeitsmengen, Sprays mit niedrigen Flüssigkeitsmengen, Ultraniedrigvolumensprays, durch Hochdruckflüssigkeitsinjektion, Spaltinjektion, als Gebläseluftspray, Luftspray oder Staub.

Eine bevorzugte Ausführungsform der vorliegenden Erfindung betrifft die Verwendung einer Verbindung der Formel (I) oder eines Salzes davon als Antioomycoticum, wobei in der Formel (I)
X aus H, OR¹, NR¹R², N(OR¹)(R²), N(R¹)-NR¹R² oder N(R¹R²R³)⁺A⁻ ausgewählt ist,
Y aus OR¹ oder O⁻Kat⁺ ausgewählt ist,
Z aus O ausgewählt ist,
R einen Substituenten darstellt, ausgewählt aus der Gruppe, bestehend aus einem unsubstituierten oder ein bzw. mehrfach substituierten (C₃-C₂₂)-Alkylrest, vorzugsweise (C₇-C₁₂)-Alkylrest, einem unsubstituierten oder ein bzw. mehrfach substituierten (C₃-C₂₂)-Alkenylrest, -CH₂[OCH₂CH₂]ₙ-OH oder -CH₂(OCH₂CH₂]ₙ-OMe, wobei n= 1-20, vorzugsweise n= 1-5, ist,
R¹, R² und R³ unabhängig voneinander aus Wasserstoff, einem (C₁-C₆)-Acylrest oder einem (C₁-C₆)-Alkylrest ausgewählt ist und
die C2-C3-Doppelbindung in E-Form vorliegt.

Wenn der Rest R für einen (C₃-C₂₂)-Alkenylrest steht, so können vorzugsweise ein bis drei Doppelbindungen vorliegen. Die Doppelbindungen können in der E- oder Z-Form vorliegen. Insbesondere können Oligoprenylreste vorliegen, die gegebenenfalls wiederum mit einem oder mehreren Substituenten aus der Gruppe α substituiert sein können. Beispielhaft sind hier Geranyl, Neryl, Farnesyl und Geranylgeranyl zu nennen.

Eine besonders bevorzugte Ausführungsform der vorliegenden Erfindung betrifft die Verwendung von (E)-4-Oxohexadec-2-ensäure (Formel (II)) bzw. deren Salze, insbesondere Alkalimetallsalze, als Antioomycoticum.

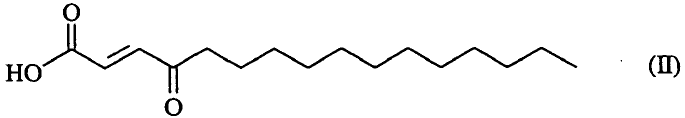

Ein weiterer Gegenstand der vorliegenden Erfindung betrifft die Verwendung einer der erfindungsgemäßen Verbindungen oder eines Salzes davon als Desinfektionsmittel für landwirtschaftliche und/oder gartenbauliche Geräte.

Die Figuren zeigen:

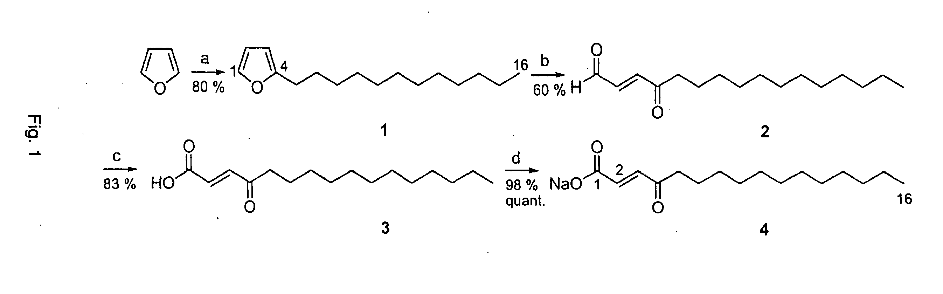

- Fig. 1:: Synthese von Natrium-(E)-4-Oxohexadec-2-enoat aus Furan. (a) Furan, THF, n-BuLi (1,1 Eq.) bei 0°C, 30 min, dann C₁₂H₂₅Br (1,0 Eq.) bei -40°C, aufwärmen auf RT; (b) **1**, NBS (1,1 Eq.), NaHCO₃ (2,0 Eq.), Aceton/H₂O (10:1), -15°C, 1 h, Pyridin (2,0 Eq.); (c) **2**, NaClO₂ (1,2 Eq.), Me₂C=CHMe (10 Eq.), *t*-BuOH, H₂O, HCl, 2 h bei RT; (d) **3**, THF, NaOH (1,0 Eq.), RT, 30 min.

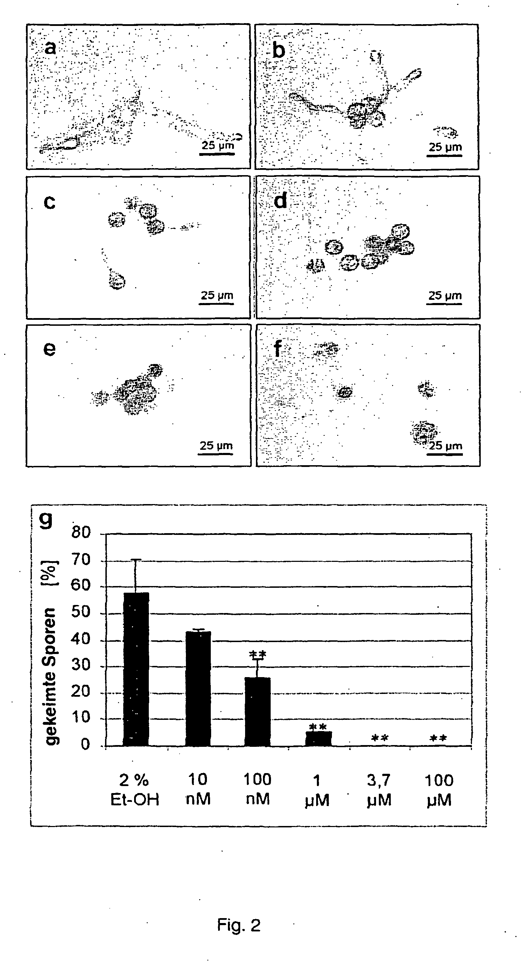

- Fig. 2:: Die Keimung von *Phytophthora infestans* Sporen wird durch (E)-4-Oxohexadec-2-ensäure gehemmt. Suspensionen von *P. infestans* Sporen wurden mit verschiedenen Verdünnungen von (E)-4-Oxohexadec-2-ensäure behandelt. (a) bis (f) zeigen repräsentative Phänotypen von Sporen in verschiedenen Konzentrationen von (E)-4-Oxohexadec-2-ensäure: (a) 2% EtOH, (b) 10 nM, (c) 100 nM, (d) 1 µM, (e) 3,7 µm, (f) 100 µM. Keimungsraten wurden nach 24 h berechnet (g). Das Diagramm zeigt vereinigte Daten aus zwei unabhängigen Versuchen (** bezeichnet signifikante Unterschiede mit p < 0,01; einfaktorielle ANOVA).

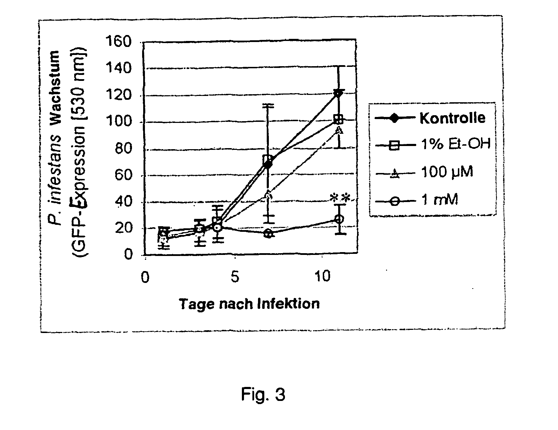

- Fig. 3:: Inhibitorischer Effekt von (E)-4-Oxohexadec-2-ensäure auf das Mycelwachstum von *P. infestans.* Einen Tag altes Mycel wurde mit (E)-4-Oxohexadec-2-ensäure in verschiedenen Konzentrationen inokuliert. Das Wachstum von *P. infestans* wurde durch Messung der GFP-Fluoreszenz bestimmt. Die Graphen zeigen vereinigte Daten aus zwei unabhängigen Versuchen (** bezeichnet signifikante Unterschiede mit p < 0,01; einfaktorielle ANOVA).

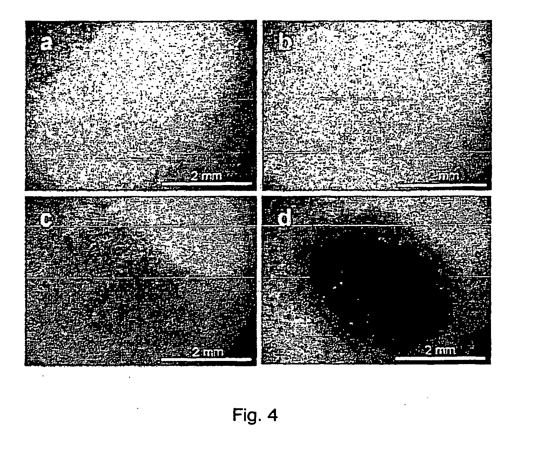

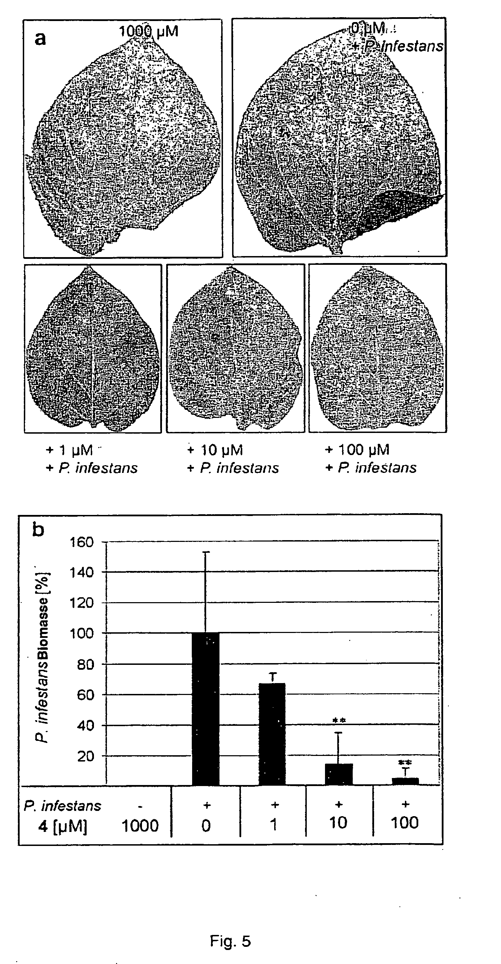

- Fig. 4:: Schädigender Einfluß von (E)-4-Oxohexadec-2-ensäure auf etabliertes *P*. *infestans* Mycel. *P. infestans* wurde für 21 Tage auf Hafer-Bohnen-Agar in Petrischalen gezüchtet. Dann wurden Tropfen (10 µl) von (E)-4-Oxohexadec-2-ensäure in verschiedenen Konzentrationen auf das Mycel pipettiert. Anti-oomycetale Aktivität führte zu Beschädigung des Mycels, angezeigt durch Verlust von GFP-Fluoreszenz. Bilder von repräsentativen behandelten Stellen des Mycels wurden 24 h nach Behandlung mit (E)-4-Oxohexadec-2-ensäure mit einem Fluoreszenz-Stereomikroskop aufgenommen. (a) unbehandelt, (b) 1 µM, (c) 10 µM, (d) 100 µM. Fig. 5: Infektionen mit *P*. *infestans* werden durch das Besprühen von Pflanzen mit Natrium-(E)-4-Oxohexadec-2-enoat (**4**) stark inhibiert. 21 Tage alte Pflanzen wurden 2 h vor Inokulation mit einer *P*. *infestans* Zoosporen-Lösung mit Natrium-(E)-4-Oxohexadec-2-enoat auf der abaxialen Blattoberfläche besprüht. (a) Phänotyp von behandelten Blättern; (b) Bestimmung der Biomasse von *P*. *infestans* aus infiziertem Blattmaterial 3 d nach Infektion. Als Kontrollen wurden mit 1000 µM Natrium-(E)-4-Oxohexadec-2-enoat besprühte nicht-infizierte Proben und infizierte, nicht-besprühte Proben genommen (** bezeichnet signifikante Unterschiede mit p < 0,01; einfaktorielle ANOVA).
- Fig .6:: Inhibitorischer Effekt von (E)-4-Oxohexadec-2-ensäure auf das Mycelwachstum von *Colletotrichum coccodes.* Einen Tag altes Mycel in 96-well Platten wurde mit verschiedenen Konzentrationen von (E)-4-Oxohexadec-2-ensäure inokuliert. Das Wachstum von *C*. *coccodes* wurde durch Messung der OD₅₉₀ bestimmt. Der Versuch wurde zweimal wiederholt mit gleichen Ergebnissen. Statistische Analyse zeigte hoch signifikante Unterschiede zwischen der Behandlung mit 2% EtOH und allen getesteten Konzentrationen von (E)-4-Oxohexadec-2-ensäure am Ende des Versuchs (p < 0,01; einfaktorielle ANOVA).

Die vorliegende Erfindung wird anhand der folgenden, nicht-einschränkenden Beispiele näher erläutert.

### Material und Methoden:

*Allgemeines.* Alle Reagenzien und Lösungsmittel waren analysenrein oder wurden mit Hilfe von Standardverfahren gereinigt. Schmelzpunkte wurden über Standardverfahren mit Hilfe eines Heiztischmikroskops (Leica DM LS2) bestimmt und sind nicht korrigiert. Reaktionen wurden mittels Dünnschichtchromatographie auf Kieselgel 60 F₂₅₄ (Merck, 0,040-0,063 mm) verfolgt und mit UV-Licht oder Molybdatophosphorsäure detektiert. Lösungen wurden bei verringertem Druck bei 40°C konzentriert. Säulenchromatographie wurde auf Kieselgel 60 (Merck, 0,063-0,200 mm) durchgeführt. ¹H (300 oder 400 MHz) und ¹³C (75,5 oder 100,5 MHz) NMR-Spektren wurden bei Raumtemperatur (RT) auf VARIAN Mercury Spektrometern aufgenommen. Für 2-Dodecylfuran und (*E*)-4-Oxohexadec-2-enal wurden chemische Verschiebungen auf internes TMS (δ=0 ppm, ¹H) beziehungsweise CDCl₃ (δ = 77,0 ppm, ¹³C) bezogen. Für (E)-4-Oxohexadec-2-ensäure wurde deuteriertes Ethanol als Lösungsmittel verwendet. Chemische Verschiebungen wurden auf Signale interner Lösungsmittel-Methylgruppen (δ = 1,11 ppm, ¹H, beziehungsweise δ = 17,2 ppm, ¹³C) bezogen. Positive und negative ESI und APCI Massenspektren wurden von einem API 150Ex (Applied Biosystems), der mit einer Turbo-Ionenquelle ausgerüstet war, erhalten. Hochaufgelöste positive und negative ESI Massenspektren wurden von einem Bruker Apex 70e FT-ICR-Massenspektrometer (Bruker Daltonics), das mit einer Infinity™-Zelle, einem 7,0 Tesla supraleitenden Magneten (Bruker), einem nur-RF Hexapol-lonenleiter und einer externen Elektrospray-lonenquelle (Agilent) ausgestattet war, erhalten. *P. infestans* Isolat 208m2 wurde auf Hafer-Bohnen-Medium (3,4 Gew.-% Bohnenmehl, 1,7 Gew.-% Hafermehl, 0,85 Gew.-% Sucrose, 1,5 Gew.-% Bacto-Agar, 5 µg/ml Geneticin) gezüchtet. Messungen GFP-emittierten Lichts wurden mit Hilfe eines Cytofluor II Plattenlesegeräts (Millipore; Anregung 485 nm, Emission 530 nm) durchgeführt. GFP-Fluoreszenzbilder wurden mit einem Leica MZ FLIII Fluoreszenz-Stereomikroskop (Leica Microsystems) aufgenommen. Zur Messung der Biomasse von *P. infestans* wurde ein MRX Plate Reader 1.12 (Dynatech Laboratories) verwendet. Quantitative PCR wurde wie beschrieben durchgeführt.

*Reagenzien und Lösungsmittel.* Tetrahydrofuran (THF), n-Buthyllithium (n-BuLi), Furan, Natriumhydroxid, HCl, Pyridin, *N*-Bromsuccinimid (NBS), 2-Methyl-2-buten, NaClO₂ und Dodecylbromid wurden von herkömmlichen Laborausstattern erworben.

### Synthese der Verbindungen

2-Dodecylfuran (Fig. 1, 1). Zu einer eiskalten Lösung von Furan (5,34 ml, 73,5 mmol) in THF (100 ml) bei 0°C wurde tropfenweise unter Rühren n-BuLi (27,3 ml, 2,7 M in Hexan, 73,5 mmol) zugegeben. Nach 1 h bei 0 bis 5°C wurde die Lösung auf -40°C abgekühlt und weitere 20 min gerührt. Dann wurde Dodecylbromid (17,6 ml) in THF (20 ml) zugegeben. Die Mischung wärmte sich auf RT auf und wurde für weitere 5 h gerührt. Die Reaktion wurde mit gesättigter, wäßriger NaHCO₃-Lösung (20 ml) gestoppt und die Lösung zweimal mit EtOAc (2 x 50 ml) extrahiert. Die vereinigten organischen Phasen wurden über NaSO₄ getrocknet und zu einem gelben Öl konzentriert. Dieses wurde mittels Säulenchromatographie (Dichlormethan, DCM) gereinigt, um das gewünschte Produkt **1** zu erhalten (13,8 g, 57,9 mmol, 80%). ¹H-NMR (300 MHz, CDCl₃) δ ¹H ppm: 0,88 (t, 3H, *J =* 6,7 Hz, H-16), 1,20 - 1,40 (m, 18H), 1,56 - 1,69 (m, 2H), 2,60 (t, 2H, *J =* 7,6 Hz, H-5), 5,96 (m, 1 H, H-3), 6,26 (dd, 1 H, *J =* 3,3, 1,9 Hz, H-1), 7,28 (dd, 1 H, *J =* 1,7, 0,8 Hz, H-2); ¹³C-NMR (75,5 MHz, CDCl₃) δ ¹³C ppm: 14,2 (C-16), 22,8, 28,0, 28,1, 29,3, 29,4, 29,5, 29,6, 29,6, 29,7, 29,8, 32,0 (C-5), 104,4 (C-3), 109,9 (C-2), 140,5 (C-1), 156,5 (C-4); (+)-APCI-CID-MS: 237 [M+H]⁺.

(E)-4-Oxohexadec-2-enal (Fig. 1, **2****).** Zu einer Mischung von 2-Dodecylfuran (1,00 g, 4,24 mmol) und NaHCO₃ (712 mg, 8,48 mmol) in Aceton/H₂O (10:1, 2 ml) wurde in Aceton/H₂O (10 ml) gelöstes NBS (905 mg, 5,11 mmol) bei -20°C zugegeben. Nach 1 h Rühren bei -20°C wurde Pyridin (0,69 ml, 8,48 mmol) zugegeben. Anschließend wärmte sich die Reaktionsmischung auf RT auf und wurde weitere 2 h gerührt. Die Lösung wurde mit 1 N HCl gewaschen, gefolgt von Extraktion mit Ethylacetat (2 x 50 ml). Die organische Phase wurde über NaSO₄ getrocknet und konzentriert um das Rohprodukt zu erhalten. Dieses wurde mittels Säulenchromatographie (DCM) gereinigt, um das Produkt als leicht gelbes Öl zu erhalten (642 mg, 2,55 mmol, 60%).

¹H-NMR (300 MHz, CDCl₃) δ ¹H ppm: 0,88 (t, 3H, *J* = 6,7 Hz, H-16), 1,19-1,36 (m, 18H), 1,59 - 1,71 (m, H-5), 2,69 (t, 2H, *J* = 7,8 Hz, H-5), 6,73 - 6,92 (m, 2H, H-2,3), 9,78 (d,CHO , *J* = 7,0 Hz, H-1); ¹³C-NMR (75,5 MHz, CDCl₃) δ ¹³C ppm: 14,2 (C-16), 22,8, 23,7, 29,2, 29,3, 29,4, 29,5, 29,5, 29,6, 29,7, 32,0, 41,3 (C-5), 137,2 (C-2), 144,8 (C-3), 193,2 (C-1), 199,9 (C-4); (-)-ESI-CID-MS: 251 [M-H]⁻; ESI-FT-ICR-MS: m/z 251,20137 (berechnet für C₁₆H₂₇O2⁻, m/z 251,20165).

(E)-4-Oxohexadec-2-ensäure (Fig. 1, 3). Zu einer Lösung aus (E)-4-Oxohexadec-2-enal (400 mg, 1,58 mmol) und 2-Methyl-2-buten (1,69 ml, 15,8 mmol) in *t*-BuOH (20 ml) wurden NaH₂PO₄ (2,00 g, 16,7 mmol) und NaClO₂ (181 mg, Reinheit 80%, 1,89 mmol), beide in H₂O gelöst (10 ml), gegeben und die erhaltene Mischung für 2 h bei RT gerührt. Der größte Teil des Lösungsmittels wurde bei verringertem Druck entfernt und EtOAc (50 ml) und eine gesättigte NaCl-Lösung (10 ml) zu dem Rückstand zugegeben. Die wäßrige Phase wurde durch tropfenweise Zugabe von 1 N HCl auf einen pH-Wert von 1 angesäuert. Dann wurde die organische Phase abgetrennt und die wäßrige Phase mit EtOAc (2 x 50 ml) extrahiert. Die vereinigten organischen Phasen wurden über NaSO₄ getrocknet und bei verringertem Druck konzentriert, um das Produkt als weiß-gelben Feststoff zu erhalten (350 mg, 1,31 mmol, 83%), Schmelzpunkt 98 ± 0,5°C. ¹H-NMR (400 MHz, CD₃CD₂OD) δ ¹H ppm: 0,87 (t, 3H, *J* = 7,0 Hz, H-16), 1,08 - 1,34 (m, 18H), 1,56 - 1,63 (m, 2H), 2,68 (t, 2H, *J* = 7,0 Hz, H-5), 6,65 (d, 1 H, *J* = 16,2 Hz, H-2), 7,01 (d, 1 H, *J* = 16.,2 Hz, H-3); ¹³C-NMR (100,5 MHz, CD₃CD₂OD) δ ¹³C ppm: 15,5 (C-16), 24,6, 25,7, 26,2, 31,0, 31,3, 31,4, 31,5, 31,6, 31,6, 33,9, 43,0 (C-5), 133,7 (C-2), 141,3 (C-3), 169,4 (C-1), 202,8 (C-4); (-)-ESI-CID-MS: m/z 267 [M-H]⁻, 535 [2M-H]⁻; (-)-ESI-CID-MS: m/z 269 [M-H]; ESI-FT-ICR-MS: m/z 267,19633 (berechnet für C₁₆H₂₇O₃⁻, m/z 267,19633).

Natrium-(E)-4-Oxohexadec-2-enoat (Fig. 1, **4****).** Zu einer Lösung von (E)-4-Oxohexadec-2-ensäure (115 mg, 0,43 mmol) in THF (100 ml) wurde NaOH (17,1 mg, 0,43 mmol) gelöst in H₂O (5 ml) zugegeben. Nach 30 min wurde der pH-Wert gemessen und mit NaOH auf 7,5 eingestellt. Das Lösungsmittel wurde bei verringertem Druck entfernt, um ein weißes Pulver zu erhalten (118 mg, 0,41 mmol, 95%).

*P. infestans Kulturbedingungen.* Für *P. infestans* Versuche wurde das Isolat 208m2, das ein GFP-Konstrukt trägt, verwendet. Lösungen von Zoosporen wurden hergestellt, indem *P. infestans* für 11 Tage auf Hafer-Bohnen-Medium in der Dunkelheit bei 18°C wachsen gelassen wurde. Das Mycel wurde dann mit 10 ml entionisiertem Wasser geflutet, für 4 h bei 4°C stehen gelassen, um die Freisetzung der Zoosporen zu ermöglichen und die Flüssigkeit dann durch eine Schicht Gaze gefiltert, um Mycelstücke und Sporangien zu entfernen. Die Lösung wurde auf 1x10⁵ Sporen/ml eingestellt. Sporangien-Lösungen wurden durch Fluten von Mycel, das 11 Tage lang wachsen gelassen wurde, mit 10 ml entionisiertem Wasser, sofortigem starken Schütteln, um die Sporangien von den Sporangiophoren abzubrechen, und Einstellen der Lösung auf 1x10⁴ Sporangien/ml hergestellt.

*P. infestans Bioassays und Infektionsversuche.* Sporenkeimungsversuche mit *P*. *infestans* Zoosporen-Lösungen wurden wie folgt durchgeführt. Eine Verdünnungsreihe von (E)-4-Oxohexadec-2-ensäure gelöst in 96%igem Ethanol wurde verwendet. Die Endkonzentration in den Sporenlösungen reichte von 10 nM bis 100 µm und jeweils 2% (v/v) 96% EtOH. Kontroll-Behandlungen mit nur 2% (v/v) 96% EtOH wurden ebenfalls durchgeführt. Nach der Behandlung wurden die Sporen über Nacht bei 4°C gehalten, um eine Keimung zu ermöglichen. Der Prozentsatz an gekeimten Sporen wurde nach Zählen der Sporen auf Fotografien, die von fünf nicht-überlappenden Bereichen eines 10 µl Tropfens in einem Hämocytometer in einem Lichtmikroskop aufgenommen wurden, berechnet. Sporen wurden als gekeimt betrachtet, wenn der Keimschlauch mindestens so lang wie der Sporendurchmesser war.

Der Effekt von (E)-4-Oxohexadec-2-ensäure auf das Mycelwachstum von *P*. *infestans* wurde durch Messen der Zunahme der GFP-Fluoreszenz über die Zeit getestet. 24-well Mikrotiterplatten (Nunc A/S, Dänemark) mit Hafer-Bohnen-Medium wurden mit 100 µl einer *P. infestans* Sporangien-Lösung inokuliert und bei 17°C in der Dunkelheit wachsen gelassen. Nach 24 h wurden verschiedene Konzentrationen von (E)-4-Oxohexadec-2-ensäure zugegeben. Die Endkonzentrationen (berechnet für 100 µl Sporangien-Lösung) reichten von 10 nM bis 1 mM und 1 % Ethanol. Wachstum von *P. infestans* wurde durch Messung von GFP-emittiertem Licht bestimmt (Anregung 485 nm, Emission 530 nm).

Um den direkten Einfluß von (E)-4-Oxohexadec-2-ensäure auf lebendes *P. infestans* Mycel zu untersuchen, wurde drei Wochen altes Mycel tropfenweise (10 µl) mit verschiedenen Konzentrationen (E)-4-Oxohexadec-2-ensäure inokuliert. 24 h später wurden GFP-Fluoreszenzbilder der inokulierten Bereiche aufgenommen.

Kartoffelpflanzen *(Solanum tuberosum* L. cv. Désirée) wurden wie beschrieben kultiviert. Vor der Inokulation mit einer *P. infestans* Zoosporen-Lösung wurden die Pflanzen mit verschiedenen Konzentrationen von in Wasser gelöstem Natrium-(E)-4-Oxohexadec-2-enoat auf der abaxialen Blattoberfläche bis zum Ablaufen eingesprüht. Zwei Stunden später, wenn die besprühten Blätter getrocknet waren, wurde *P. infestans* auf der abaxialen Blattoberfläche inokuliert (sechs 10 µl Tropfen pro Blatt; 1x10⁵ Sporen/ml; zwei Blätter pro Pflanze). Die inokulierten Blätter wurden dann mit Plastiktüten bedeckt, um 100% relative Luftfeuchte für die Sporenkeimung bereitzustellen. Nach drei Tagen wurden die Inokulationsstellen mit einem Korkbohrer ausgeschnitten und alle Blattscheiben eines bestimmten Blattes zu einer Probe vereinigt. Bestimmungen der Biomasse von *P. infestans* wurden mit Hilfe von quantitativer PCR unter Verwendung von *P*. *infestans-*spezifischen Primern durchgeführt.

*Colletotrichum coccodes Bioassay. C. coccodes* (CBS369.75) wurde für fünf Tage in 50 ml flüssigem Sojabohnen-Medium in der Dunkelheit bei 18°C auf einem Rotationsschüttler wachsen gelassen. Um Sporen zu isolieren, wurde die gesamte Kultur bei 2100 g und 4°C für 5 min zentrifugiert. Der die Sporen enthaltende Überstand wurde wieder zentrifugiert (10 min, 6500 g, 4°C). Nach Abnehmen des Überstands wurden die pelletierten Sporen vorsichtig in entionisiertem Wasser gewaschen, wie vorstehend zentrifugiert und letztlich die Sporenkonzentration auf 1x10⁵ Sporen/ml in Sojabohnen-Medium eingestellt. Für den Biotest wurden 200 µl dieser Sporenlösung in jede Vertiefung einer 96-well Platte (Nunc A/S, Dänemark) pipettiert. Die Platten wurden in einem Inkubator für 24 h bei 17°C in der Dunkelheit inkubiert, um eine Keimung zu ermöglichen. Dann wurden Testkonzentrationen von (E)-4-Oxohexadec-2-ensäure wie oben beschrieben dazu pipettiert, mit Endkonzentrationen von 0,01 µM bis 100 µM und 2% (v/v) Ethanol. Die Platten wurden in den Inkubator zurückgestellt und eine Zunahme der fungalen Biomasse durch tägliche OD₅₉₀-Messungen bestimmt.

### Beispiel 1: Synthese von (E)-4-Oxohexadec-2-ensäure

Es wurde eine schnelle und effiziente Synthese von hoch bioaktiven ungesättigten Fettsäuren in drei Schritten entwickelt (Fig. 1). Die Synthese von (E)-4-Oxohexadec-2-ensäure **(3)** beginnt mit einer einfachen 2-Alkylierung von Furan über die Deprotonierung mit *n*-Buthyllithium und nachfolgender Reaktion mit Dodecylbromid zu 2-Dodecylfuran **(1).** Die oxidative Ringöffnung des Alkylfurans wird in Anwesenheit von NaHCO₃ und NBS durchgeführt, um (E)-4-Oxohexadec-2-enal (2) zu erzeugen. Der letzte Schritt ist die Oxidation des Aldehyds **2** mit NaClO₂ zu (E)-4-Oxohexadec-2-ensäure **(3)** in Anwesenheit von 2-Methyl-2-buten als Chlorradikalfänger und 1 N HCl (pH = 1). Die Gesamtausbeute des dreistufigen Verfahrens beträgt 35%. Um die Wasserlöslichkeit der Verbindung **3** zu erhöhen, ist es für ein Besprühen von Pflanzen zweckmäßiger, quantitativ das Natriumsalz mit NaOH zu bilden.

### Beispiel 2: P. infestans Sporenkeimungsassay

Um den Effekt von (E)-4-Oxohexadec-2-ensäure (Fig. 1, Verbindung **3)** auf die Sporenkeimung von *P. infestans* zu bestimmen, wurden verschiedene Konzentrationen davon in vorbereiteten Sporenlösungen eingestellt und 24 h später die Keimungsraten bestimmt (Fig. 2). Selbst bei sehr niedrigen Konzentrationen (10 nM) war die Keimung verringert, bei 100 nM um mehr als 50%, verglichen mit der Ethanol-Kontrolle. Bei 1 µM keimten weniger als 10% der Sporen und bei 3,7 µM war die Keimung vollständig unterbunden. Steigende Konzentrationen von (E)-4-Oxohexadec-2-ensäure beeinflußten auch die Länge der Keimschläuche (Fig. 2 a bis f). Weiter konnte bei einer Konzentration von 100 µM Lyse der Sporen beobachtet werden (Fig. 2 f).

### Beispiel 3: Mycelwachstum von P. infestans

Der inhibitorische Effekt von (E)-4-Oxohexadec-2-ensäure auf das Mycelwachstum eines GFP-exprimierenden *P. infestans* wurde in einem Bioassay untersucht. Verschiedene Konzentrationen wurden auf Mycel, das in Multiwell-Platten wuchs, aufgebracht. Als Maß für das Mycelwachstum wurde GFP-Fluoreszenz mit einem Plattenlesegerät aufgenommen. Figur 3 zeigt, daß das Wachstum bei hohen Konzentrationen (1 mM) inhibiert war.

Außerdem wurde der Effekt von (E)-4-Oxohexadec-2-ensäure auf reifes Mycel untersucht. Dabei wurden Testlösungen auf drei Wochen altes Mycel, das auf Agarplatten wuchs, aufgetropft. Figur 4 zeigt, daß hier auch niedrigere Konzentrationen einen eindeutigen negativen Effekt auf die Lebensfähigkeit des Mycels hatte.

### Beispiel 4: Infektion von vorbehandelten Pflanzen mit P. infestans

Es wurde ferner untersucht, ob eine Vorbehandlung von Kartoffelpflanzen mit Natrium-(E)-4-oxohexadec-2-enoat (Fig. 1, Verbindung **4)** einen inhibitorischen Effekt auf Infektion mit *P. infestans* hat. Dazu wurden in einer Phytokammer gezüchtete Pflanzen zwei Stunden vor Inokulation mit einer *P. infestans* Zoosporen-Lösung mit in Wasser gelöstem Natrium-(E)-4-oxohexadec-2-enoat besprüht. Drei Tage nach Inokulation wurde, basierend auf Detektion von *P. infestans* DNA über quantitative PCR, das Wachstum von *P. infestans* bestimmt. Figur 5 zeigt, daß eine Vorbehandlung der Pflanzen mit 10 µM und 100 µM Natrium-(E)-4-oxohexadec-2-enoat ausreicht, die Infektion mit *P. infestans* um 80% bzw. 95%, verglichen mit unbehandelten Kontrollpflanzen, zu inhibieren. Eine Behandlung mit einer sehr hohen Konzentration von 1000 µM Natrium-(E)-4-oxohexadec-2-enoat zeigte dabei keine toxischen Wirkungen auf die Blätter.

### Beispiel 5: Effekt von (E)-4-Oxohexadec-2-ensäure auf das Mycelwachstum von Colletotrichum coccodes

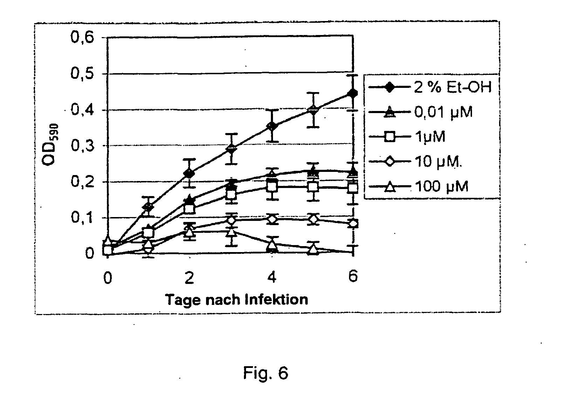

Um zu bestimmen, ob (E)-4-Oxohexadec-2-ensäure auch einen inhibitorischen Effekt auf den Ascomyceten *C. coccodes,* unter anderem Verursacher der Colletotrichum-Welkekrankheit der Kartoffel, hat, wurde ein Multiwell-Bioassay etabliert. Basierend auf der Messung der optischen Dichte (OD₅₉₀) wurde das Wachstum des Pilzes in flüssigem Medium bestimmt. Dazu wurde ein Soja-enthaltendes Medium verwendet. Einen Tag altes Mycel wurde zusammen mit verschiedenen Konzentrationen von (E)-4-Oxohexadec-2-ensäure inokuliert und das Wachstum von *C. coccodes* alle 24 h bestimmt. Wie in Figur 6 gezeigt, inhibierten bereits niedrige Konzentrationen (0,01 µm) signifikant das Wachstum von *C. coccodes.* Steigende Konzentrationen verringerten das Wachstum des Pilzes weiter. Eine 1 µM Lösung von (E)-4-Oxohexadec-2-ensäure hemmte das Wachstum um mehr als die Hälfte verglichen mit der Ethanol-Kontrolle. 100 µM führten zu kompletter Inhibierung.

### Beispiel 6: Sporenkeimungsassay-Daten ausgewählter Verbindungen gemäß der vorliegenden Erfindung:

| **Substanz** | **MG g/mol** | ***Phytophtora Infestans* (Sporenkeimung)** | | ***Phytophtora Infestans* (Mycelwachstum)** | |
|---|---|---|---|---|---|
| | | *IC 50 µmol*/*L* | *IC 50 µg*/*ml* | *IC 50 µmol*/*L* | *IC 50 µg*/*ml* |
| 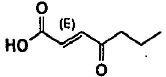 | 142,1 | 0,014 | 0.0019 | Nicht durchgeführt | Nicht durchgeführt |
| **XGL332** | | | | | |
| 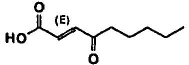 | 170,2 | 0,012 | 0,002 | Nicht durchgeführt | Nicht durchgeführt |
| **XGL334** | | | | | |
| 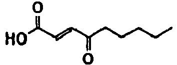 | 170,2 | 0,014 | | Nicht durchgeführt | Nicht durchgeführt |
| **XGL385** | | | | | |
| 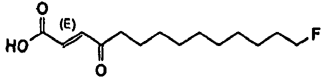 | 258,3 | 0,07 | 0,018 | 80 | 20,664 |
| **DRT276** | | | | | |
| 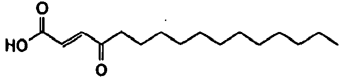 | 268,4 | 0,07 | 0,0018 | 450 | 120,78 |
| **DRT173** | | | | | |
| 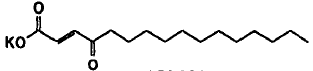 | 306,5 | 0,06 | 0,018 | Nicht durchgeführt | Nicht durchgeführt |
| **XGL384** | | | | | |
| 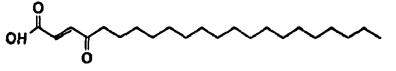 | 352,5 | 0,1 | 0,035 | Nicht durchgeführt | Nicht durchgeführt |
| **XGL388** | | | | | |

## Patentansprüche

1. Verwendung einer Verbindung der Formel (I) oder eines Salzes davon als Antioomycoticum: 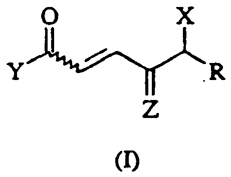 worin
X aus H, OR¹, SR¹, NR¹R², N(OR¹)(R²), N(R¹)-NR¹R² oder N(R¹R²R³)⁺A⁻ ausgewählt ist,
Y aus OR¹, O⁻Kat⁺ oder NR¹R² ausgewählt ist,
Z aus O, S, NR¹, NOR¹, N-CN oder N-NR¹R² ausgewählt ist,
R einen Substituenten darstellt, ausgewählt aus der Gruppe, bestehend aus (i) einem unsubstituierten oder ein bzw. mehrfach substituierten (C₃-C₂₂)-Alkylrest, (ii) einem unsubstituierten oder ein bzw. mehrfach substituierten (C₃-C₂₂)-Alkenylrest, (iii) einem unsubstituierten oder ein bzw. mehrfach substituierten (C₃-C₂₂)-Alkinylrest, (iv) einem unsubstituierten oder ein bzw. mehrfach substituierten -(CH₂)ₘ-Sperminrest, (v) einem unsubstituierten oder ein bzw. mehrfach substituierten -(CH₂)ₘ-Spermidinrest, (vi) einem unsubstituierten oder ein bzw. mehrfach substituierten N-methylierten -(CH₂)ₘ-Sperm(id)inrest, wobei m jeweils eine ganze Zahl von 1 bis 4 ist, und wobei der eine oder die mehreren Substituenten in den vorstehend genannten Resten (i) bis (vi) unabhängig voneinander aus der Gruppe α, bestehend aus einem (C₁-C₆)-Alkylrest, einem (C₁-C₆)-Thioalkylrest, einem (C₃-C₇)-Cycloalkylrest, der ein oder mehrere Heteroatome, wie beispielsweise O oder S, aufweisen kann, einem (C₁-C₆)-Alkoxyrest, einer Hydroxygruppe, einer Trifluormethylgruppe, einer Triazolgruppe, Brom, Chlor, Fluor, einem un-, mono- oder disubstituiertem Phenyl-, Phenoxy-, Benzyl-, Benzyloxy-, Naphthyl- oder Naphthoxyrest ausgewählt sein kann bzw. können, und (vii) einer Ethylenoxygruppe, ausgewählt aus
-CH₂[OCH₂CH₂]ₙ-OH,
-CH₂[OCH₂CH₂]ₙ-OMe.
-CH₂-CH₂-[OCH₂CH₂]ₙ-OH
-CH₂-CH₂-[OCH₂CH₂]ₙ-OMe
-CH₂-CH₂-CH₂-[OCH₂CH₂]ₙ-OH
-CH₂-CH₂-CH₂-[OCH₂CH₂]ₙ-OMe
-CH₂-CH₂-CH₂-CH₂-[OCH₂CH₂]ₙ-OH oder
-CH₂-CH₂-CH₂-CH₂-[OCH₂CH₂]ₙ-OMe,
mit n= 1-20, vorzugsweise n= 1-5,
R¹, R² und R³ unabhängig voneinander aus Wasserstoff, einem (C₁-C₆)-Acylrest, -CONH₂, -(CO)-(CH₂)₀₋₆-COOH, einem Lactylrest, einem (C₁-C₆)-Alkylrest, einem (C₃-C₇)-Cycloalkylrest, der ein oder mehrere Heteroatome, wie beispielsweise O oder S, aufweisen kann, einem un-, mono- oder disubstituiertem Phenyl-, Benzyl-, oder Naphthylrest, dessen Substituenten aus der Gruppe α ausgewählt sein können, ausgewählt ist,
A⁻ für ein Anion, ausgewählt aus Halogenid, Chlorat oder Carboxylat, steht,
Kat⁺ für ein einwertiges oder zweiwertiges Kation steht,
das Stereozentrum am C5, wenn vorhanden, in R- oder S-Form oder als Racemat vorliegt, und
die C2-C3-Doppelbindung in E- oder Z-Form vorliegt.

2. Verwendung gemäß Anspruch 1, worin in der Formel (I)
X aus H, OR¹, NR¹R², N(OR¹)(R²), N(R¹)-NR¹R² oder N(R¹R²R³)⁺A⁻ ausgewählt ist,
Y aus OR¹ oder O⁻Kat⁺ ausgewählt ist,
Z aus O ausgewählt ist,
R einen Substituenten darstellt, ausgewählt aus der Gruppe, bestehend aus einem unsubstituierten oder ein bzw. mehrfach substituierten (C₃-C₂₂)-Alkylrest, vorzugsweise (C₇-C₁₂)-Alkylrest oder einem unsubstituierten oder ein bzw. mehrfach substituierten (C₃-C₂₂)-Alkenylrest,
R¹, R² und R³ unabhängig voneinander aus Wasserstoff, einem (C₁-C₆)-Acylrest oder einem (C₁-C₆)-Alkylrest ausgewählt ist und
die C2-C3-Doppelbindung in E-Form vorliegt.

3. Verwendung gemäß Anspruch 1 oder 2, worin X für OR¹ steht und R¹ für Wasserstoff, einen (C₁-C₆)-Acylrest oder einen (C₁-C₆)-Alkylrest steht.

4. Verwendung gemäß einem der Ansprüche 1 bis 3, worin R einen (C₃-C₂₂)-Alkylrest, einen (C₃-C₂₂)-Alkenylrest, -CH₂[OCH₂CH₂]ₙ-OH oder -CH₂[OCH₂CH₂]ₙ-OMe darstellt, wobei n= 1-20, vorzugsweise n= 1-5, ist.

5. Verwendung gemäß einem der Ansprüche 1 bis 4, worin R für einen Oligoprenylrest, ausgewählt aus Geranyl, Neryl, Famesyl und Geranylgeranyl, steht.

6. Verwendung gemäß einem der Ansprüche 1 bis 4, wobei die Verbindung gemäß Formel (I) (E)-4-Oxohexadec-2-ensäure bzw. deren Salze ist.

7. Verfahren zur Bekämpfung von Pflanzenpathogenen, umfassend das Aufbringen einer wirksamen Menge der Verbindung aus einem der Ansprüche 1 bis 6 oder eines Salzes davon auf eine Pflanze, Teile der Pflanze oder den Boden in dem die Pflanze wächst,
wobei die Pflanzenpathogene ausgewählt sind aus Eipilzen *(Peronosporomycetes).*

8. Verfahren nach Anspruch 7, wobei die Pflanzenpathogene Eipilze sind, und weiter ausgewählt sind aus der Gruppe, bestehend aus den Gattungen *Albugo, Bremia, Plasmopara, Peronospora* und *Phytophthora.*

9. Verfahren nach Anspruch 8, wobei das Pflanzenpathogen *Peronospora manshurica* ist.

10. Verfahren nach Anspruch 8, wobei die Pflanzenpathogene der Gattung *Phytophthora* angehören, und weiter ausgewählt sind aus der Gruppe, bestehend aus *Phytophthora sojae, Phytophthora palmivora, Phytophthora ramorum, Phytophthora cinnamomi, Phytophthora capsici* und *Phytophthora infestans.*

11. Verfahren nach Anspruch 10, wobei das Pflanzenpathogen *Phytophthora infestans* ist.

12. Verfahren nach einem der Ansprüche 7 bis 11, wobei die Pflanze ausgewählt ist aus der Gruppe, bestehend aus den *Fabaceae,* insbesondere *Glycine max;* den *Cucurbitaceae,* insbesondere *Cucurbita spp.* wie *Cucurbita pepo, Cucumis spp.* wie *Cucumis melo* und *Cucumis sativus,* und *Citrullus spp.* wie *Citrullus lanatus;* den *Brassicaceae,* insbesondere *Brassica spp.* wie *Brassica napus, Brassica cleracea* und *Brassica rapa;* den *Poaceae,* insbesondere *Triticum spp., Hordeum spp., Oryza sativa* und *Zea mays;* den *Solanaceae,* insbesondere *Nicotiana spp.* wie *Nicotiana tabacum, Capsicum spp.* wie *Capsicum annuum,* und *Solanum spp.* wie *Solanum tuberosum, Solanum lycopersicum* und *Solanum melongena; Vitis spp.* wie *Vitis vinifera; Beta vulgaris;* und *Theobroma cacao.*

13. Verfahren nach Anspruch 12, wobei die Pflanze *Solanum tuberosum* ist.

14. Verfahren nach einem der Ansprüche 7 bis 13, wobei die Konzentration der Verbindung aus einem der Ansprüche 1 bis 6 oder des Salzes davon von 1 nM bis 10 mM reicht.

## Claims

1. Use of a compound of formula (I) or a salt thereof as anti-oomycotic agent: 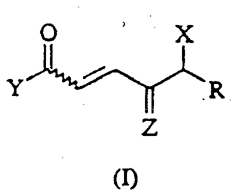 wherein
X is selected from H, OR¹, SR¹, NR¹R², N(OR¹)(R²) N(R¹)-NR¹R² or N(R¹R²R³A⁻,
Y is selected from OR¹, O⁻Kat⁺ or NR¹R²,
Z is selected from O, S, NR¹, NOR¹, N-CN or N-NR¹R²,
R represents a substituent, selected from the group consisting of
(i) an unsubstituted or mono- or polysubstituted (C₃-C₂₂) alkyl residue,
(ii) an unsubstituted or mono- or polysubstituted (C₃-C₂₂) alkenyl residue,
(iii) an unsubstituted or mono- or polysubstituted (C₃-C₂₂) alkynyl residue,
(iv) an unsubstituted or mono- or polysubstituted -(CH₂)ₘ spermine residue,
(v) an unsubstituted or mono- or polysubstituted -(CH₂)ₘ spermidine residue,
(vi) an unsubstituted or mono- or polysubstituted N-methylated (CH₂)ₘ sperm(id)ine residue,
wherein m is individually an integer from 1 to 4, and wherein the one or more substituents in the residues (i) to (vi) mentioned above can independently be selected from the group α, consisting of a (C₁-C₆) alkyl residue, a (C₁-C₆) thioalkyl residue, a (C₃-C₇) cycloalkyl residue having one or more heteroatoms such as O or S, a (C₁-C₆) alkoxy residue, a hydroxyl group, a trilfluoromethyl group, a triazole group, bromine, chlorine, fluorine, an un-, mono- or disubstituted phenyl, phenoxy, benzyl, benzyloxy, naphthyl or naphthoxy residue, and
(vii) an ethylene oxy group, selected from
-CH₂[OCH₂CH₂]ₙ-OH,
-CH₂[OCH₂CH₂]ₙ-OMe,
-CH₂-CH₂-[OCH₂CH₂]ₙ-OH
-CH₂-CH₂-[OCH₂CH₂]ₙ-OMe
-CH₂-CH₂-CH₂-[OCH₂CH₂]ₙ-OH
-CH₂-CH₂-CH₂-[OCH₂CH₂]ₙ-OMe
-CH₂-CH₂-CH₂-CH₂-[OCH₂CH₂]ₙ-OH or
-CH₂-CH₂-CH₂-CH₂-[OCH₂CH_{2]n}-OMe,
wherein n = 1-20, preferably n = 1-5,
R¹, R² and R³ are independently selected from hydrogen, a (C₁-C₆) acyl residue, -CONH₂, -(CO)-(CH₂)₀₋₆-COOH, a lactyl residue, a (C₁-C₆) alkyl residue, a (C₃-C₇) cycloalkyl residue having one or more heteroatoms such as O or S, an un-, mono- or disubstituted phenyl, benzyl, or naphthyl residue, whose substituents can be selected from the group α,
A- represents an anion, selected from halogenide, chlorate or carboxylate,
Kat⁺ represents a monovalent or divalent cation,
the stereoisomeric center at C5, if present, is present in R- or S-form or as a racemate, and
the C2-C3 double bond is present in E- or Z-form.

2. Use according to claim 1, wherein in the formula (I)
X is selected from H, OR¹, NR¹R², N(OR¹)(R²), N(R¹)-NR¹R² or N(R¹R²R³)⁺A⁻,
Y is selected from OR¹ or O⁻Kat⁺,
Z is selected from O,
R represents a substituent, selected from the group consisting of an unsubstituted or mono- or polysubstituted (C₃-C₂₂) alkyl residue, preferably a (C₇-C₁₂) alkyl residue, or an unsubstituted or mono- or polysubstituted (C₃-C₂₂) alkenyl residue,
R¹, R² and R³ are independently selected from hydrogen, a (C₁-C₆) acyl residue or a (C₁-C₆) alkyl residue, and
the C2-C3 double bond is present in E-form.

3. Use according to claim 1 or 2, wherein X represents OR¹ and R¹ represents hydrogen, a (C₁-C₆) acyl residue or a (C₁-C₆) alkyl residue.

4. Use according to any one of claims 1 to 3, wherein R represents a (C₃-C₂₂) alkyl residue, a (C₃-C₂₂) alkenyl residue, -CH₂[OCH₂CH₂]ₙ-OH or -CH₂[OCH₂-CH₂]ₙ-OMe, wherein n = 1-20, preferably n = 1-5.

5. Use according to any one of claims 1 to 4, wherein R represents an oligoprenyl residue, selected from geranyl, neryl, farnesyl and geranylgeranyl.

6. Use according to any one of claims 1 to 4, wherein the compound according to formula (I) is (E)-4-Oxohexadec-2-enic acid or salts thereof.

7. Method for the control of plant pathogens, comprising applying an effective amount of the compound of any one of claims 1 to 6 or a salt thereof to a plant, parts of a plant, or the soil in which the plant grows, wherein the plant pathogens are selected from Oomycetes (*Peronosporomycetes*)*.*

8. Method according to claim 7, wherein the plant pathogens are Oomycetes, and are further selected from the group consisting of the genera *Albugo, Bremia, Plasmopara, Peronospora* and *Phytophthora.*

9. Method according to claim 8, wherein the plant pathogen is *Peronospora manshurica.*

10. Method according to claim 8, wherein the plant pathogens belong to the genus *Phytophthora,* and are further selected from the group consisting of *Phytophthora sojae, Phytophthora palmivora, Phytophthora ramorum, Phytophthora cinnamomi, Phytophthora capsici* and *Phytophthora infestans.*

11. Method according to claim 10, wherein the plant pathogen is *Phytophthora infestans.*

12. Method according to any one of claims 7 to 11, wherein the plant is selected from the group consisting of *Fabaceae,* in particular *Glycine max; Cucurbitaceae,* in particular *Cucurbita spp.* such as *Cucurbita pepo, Cucumis spp.* such as *Cucumis melo* and *Cucumis sativus,* and *Citrullus spp.* such as *Citrullus lanatus; Brassicaceae,* in particular *Brassica spp.* such as *Brassica napus, Brassica cleracea* and *Brassica rapa; Poaceae,* in particular *Triticum spp., Hordeum spp., Oryza sativa* and *Zea mays; Solanaceae,* in particular *Nicotiana spp.* such as *Nicotiana tabacum, Capsicum spp.* such as *Capsicum annuum,* and *Solanum spp.* such as *Solanum tuberosum, Solanum lycopersicum* and *Solanum melongena; Vitis spp.* such as *Vitis vinifera; Beta vulgaris;* and *Theobroma cacao.*

13. Method according to claim 12, wherein the plant is *Solanum tuberosum.*

14. Method according to any one of claims 7 to 13, wherein the concentration of the compound of any one of claims 1 to 6 or the salt thereof is from 1 nM to 10 mM.

## Revendications

1. Utilisation d'un composé de formule (I) ou d'un sel de celui-ci comme anti-oomycète : 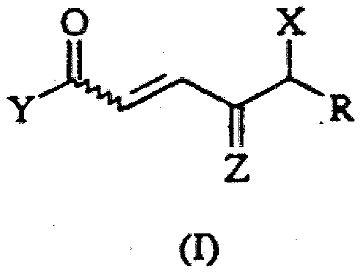 dans laquelle :
X est choisi parmi H, OR¹, SR¹, NR¹R², N(OR¹) (R²) , N (R¹) -NR¹R² ou N(R¹R²R³)⁺A⁻,
Y est choisi parmi OR¹, O⁻Kat⁺ ou NR¹R²,
Z est choisi parmi 0, S, NR¹, NOR¹, N-CN ou N-NR¹R²,
R représente un substituant choisi dans le groupe consistant en (i) un radical alkyle (en C₃ à C₂₂) non substitué ou mono- ou multi-substitué, (ii) un radical alcényle (en C₃ à C₂₂) non substitué ou mono- ou multisubstitué, (iii) un radical alcinyle (en C₃ à C₂₂) non substitué ou mono- ou multi-substitué, (iv) un radical -(CH₂)ₘ-spermine non substitué ou mono- ou multi-substitué, (v) un radical (CH₂)ₘ-spermidine non substitué ou mono- ou multi-substitué, (vi) un radical -(CH₂)ₘ-sperm(id)ine N-méthylé non substitué ou mono-ou multi-substitué, dans lequel m est respectivement un nombre entier de 1 à 4 et dans lequel l'un ou les multiples substituants dans les radicaux (i) à (vi) mentionnés précédemment peut ou peuvent être choisis, indépendamment les uns des autres, dans le groupe α consistant en un radical alkyle (en C₁ à C₆), un radical thioalkyle (en C₁ à C₆), un radical cycloalkyle (en C₃ à C₇) qui peut présenter un ou plusieurs hétéroatomes tels que par exemple, O ou S, un radical alcoxy (en C₁ à C₆), un groupe hydroxy, un groupe trifluorométhyle, un groupe triazole, un atome de brome, de chlore, de fluor, un radical phényle, phénoxy, benzyle, benzyloxy, naphtyle ou naphtoxy non substitué; mono- ou disubstitué, et (vii) un groupe éthylène-oxy choisi parmi :
-CH₂[OCH₂CH₂]ₙ-OH,
-CH₂[OCH₂CH₂]ₙ-OMe,
-CH2-CH2-[OCH₂CH₂]ₙ-OH,
-CH₂-CH₂-[OCH₂CH₂]ₙ-OMe,
-CH₂-CH₂-CH₂-[OCH₂CH₂]ₙ-OH,
-CH₂-CH₂-CH₂-[OCH₂CH₂]ₙ-OMe,
-CH₂-CH₂-CH₂-CH₂-[OCH₂CH₂]ₙ-OH ou
-CH₂-CH₂-CH₂-CH₂-[OCH₂CH₂]ₙ-OMe,
où n = 1 à 20, de préférence, n = 1 à 5,
R¹, R² et R³ sont choisis indépendamment les uns des autres parmi un atome d'hydrogène, un radical acyle (en C₁ à C₆), -CONH₂, -(CO)-CH₂)₀ à ₆-COOH, un radical lactyle, un radical alkyle (en C₁ à C₆), un radical cycloalkyle (en C₃ à C₇) qui peut présenter un ou plusieurs hétéroatomes tels que par exemple 0 ou S, un radical phényle, benzyle ou naphtyle non substitué, mono- ou disubstitué, dont les substituants peuvent être choisis dans le groupe α,
A⁻ représente un anion choisi parmi un halogénure, un chlorate ou un carboxylate,
Kat⁺ représente un cation monovalent ou divalent,
le stéréocentre en C5, s'il est présent, se présente sous forme R ou S ou de racémate, et
la double liaison C2-C3 se présente sous forme E ou Z.

2. Utilisation selon la revendication 1, dans laquelle dans la formule (I) :
X est choisi parmi H, OR¹, NR¹R², N(OR¹) (R²) , N(R¹)-NR¹R² ou N(R¹R²R³)⁺A⁻,
Y est choisi parmi OR¹ ou O⁻Kat⁺,
Z est choisi parmi les O,
R représente un substituant choisi dans le groupe consistant en un radical alkyle (en C₃ à C₂₂) non substitué ou mono- ou multi-substitué, de préférence, un radical alkyle (en C₇ à C₁₂) ou un radical alcényle (en C₃ à C₂₂) non substitué ou mono- ou multi-substitué,
R¹, R² et R³ sont choisis, indépendamment les uns des autres parmi un atome d'hydrogène, un radical acyle (en C₁ à C₆) ou un radical alkyle (en C₁ à C₆) et
la double liaison C2-C3 se présente sous forme E.

3. Utilisation selon la revendication 1 ou 2, dans laquelle X représente OR¹, et R¹ représente un atome d'hydrogène, un radical acyle (en C₁ à C₆) ou un radical alkyle (en C₁ à C₆) .

4. Utilisation selon l'une des revendications 1 à 3, dans laquelle R est un radical alkyle (en C₃ à C₂₂), un radical alcényle (en C₃ à C₂₂), -CH₂ [OCH₂CH₂]ₙ-OH ou -CH₂[OCH₂CH₂]ₙ-OMe, où n = 1 à 20, de préférence, n = 1 à 5.

5. Utilisation selon l'une des revendications 1 à 4, dans laquelle R désigne un radical oligoprényle choisi parmi les groupes géranyle, néryle, farnésyle et géranylgéranyle.

6. Utilisation selon l'une des revendications 1 à 4, dans laquelle le composé selon la formule (I) est l'acide (E)-4-oxohexadéc-2-énique ou ses sels.

7. Procédé de lutte contre des agents pathogènes des plantes, comprenant l'application d'une quantité efficace du composé selon l'une des revendications 1 à 6 ou un sel de celui-ci sur une plante, des parties de la plante ou le sol dans lequel la plante pousse, les agents pathogènes étant choisis parmi les oomycètes *(Peronosporomycetes).*

8. Procédé selon la revendication 7, dans lequel les agents pathogènes des plantes sont des oomycètes et sont choisis en outre dans le groupe consistant en les genres *Albugo, Bremia, Plasmopara, Peronospora* et *Phytophthora.*

9. Procédé selon la revendication 8, dans lequel l'agent pathogène des plantes est *Peronospora manshurica.*

10. Procédé selon la revendication 8, dans lequel les agents pathogènes des plantes font partie du genre *Phytophthora* et sont choisis en outre dans le groupe consistant en *Phytophthora sojae, Phytophthora palmivora, Phytophthora ramorum, Phytophthora cinnamomi, Phytophthora capsici* et *Phytophthora infestans.*

11. Procédé selon la revendication 10, dans lequel l'agent pathogène des plantes est *Phytophthora infestans.*

12. Procédé selon l'une des revendications 7 à 11, dans lequel la plante est choisie dans le groupe consistant en fabacées, en particulier *Glycine max.,* en cucurbitacées, en particulier *Cucurbita spp.,* telle que *Cucurbita pepo, Cucumis spp.* telle que *Cucumis melo* et *Cucumis sativus* et *Citrullus spp.* telle que *Citrullus lanatus,* les brassicacées, en particulier *Brassica spp.* telle que *Brassica napus, Brassica cleracea* et *Brassica rapa ;* les poacées, en particulier *Triticum spp., Hordeum spp., Oryza sativa* et *Zea mays,* les solanacées, en particulier *Nicotiana spp.,* telle que *Nicotiana tabacum, Capsicum spp.* telle que *Capsicum annuum* et *Solanum spp.,* telle que Solanun tuberosum, Solanum lycopersicum et Solanum melongena ; *Vitis spp.,* telle que *Vitis vinifera ; Beta vulgaris ;* et *Theobroma cacao.*

13. Procédé selon la revendication 12, dans lequel la plante est *Solanum tuberosum.*

14. Procédé selon l'une des revendications 7 à 13, dans lequel la concentration du composé selon l'une des revendications 1 à 6 ou du sel de celui-ci est de 1 nM à 10 mM.
